# EUROPEAN PATENT APPLICATION

(11) **EP 4 840 619 A1**
(43) Date of publication of application: **18.11.2026**
(21) Application number: 26171725.0
(22) Date of filing: 10.04.2026
(51) Int. Cl.: B29C 73/16, B29B 17/02, B29L 30/00

(54) **COMPONENT ANALYSIS METHOD FOR PUNCTURE SEALANT**

(30) Priority: 14.05.2025 JP 2025081282
(71) Applicant: SUMITOMO RUBBER INDUSTRIES, LTD., Kobe-shi, Hyogo 651-0072 (JP)
(72) Inventor: FURUKAWA, TSUYOSHI, Hyogo, 651-0072 (JP)
(74) Representative: Forresters IP LLP

(57) **Abstract**

Component analysis is performed on a puncture sealant (10). An analysis method for a puncture sealant is a component analysis method for a puncture sealant that contains at least a rubber component, a tackifier, an antifreeze agent, and water. The analysis method for the puncture sealant includes: a step of separating a liquid phase (10a) and a solid phase (10b) from the puncture sealant; step S32 of obtaining a dry solid (10a1) by drying the separated liquid phase; and step S34 of identifying a component contained in the dry solid by thermal analysis.

## Description

### BACKGROUND OF THE INVENTION

### Field of the Invention

The present invention relates to a component analysis method for a puncture sealant.

### Background Art

Japanese Laid-Open Patent Publication No. 2017-210583 discloses a puncture sealant that contains natural rubber latex and a fat or oil having an iodine value of 90 to 165. Such a puncture sealant can provide favorable injectability and excellent initial sealing performance.

A puncture sealant contains various components such as rubber components.

### SUMMARY OF THE INVENTION

An analysis method for a puncture sealant disclosed herein is a component analysis method for a puncture sealant that contains at least a rubber component, a tackifier, an antifreeze agent, and water. The analysis method for the puncture sealant includes: a step of separating a liquid phase and a solid phase from the puncture sealant; a step of obtaining a dry solid by drying the separated liquid phase; and a step of identifying a component contained in the dry solid by thermal analysis.

According to such an analysis method, the accuracy in analyzing the components contained in the puncture sealant is favorable.

### BRIEF DESCRIPTION OF THE DRAWINGS

FIG. 1 is a schematic diagram of a puncture repair kit 1;
FIG. 2 is a flowchart of a recycling method for a puncture sealant 10;
FIG. 3 is a schematic diagram of steps in recycling the puncture sealant 10;
FIG. 4 is a flowchart of a component analysis method for the puncture sealant 10;
FIG. 5 is a flowchart of a recycling method for the puncture sealant 10;
FIG. 6 is a graph showing an example of thermal decomposition curves that are obtained when a dry solid is subjected to thermal analysis; and
FIG. 7 is a graph showing derivative curves of the thermal decomposition curves in FIG. 6.

### DETAILED DESCRIPTION

Hereinafter, an embodiment of the present invention will be described with reference to the drawings. The present invention is not limited to the following embodiment. Each drawing is schematically drawn and does not necessarily reflect the actual one. In addition, each drawing shows only one example, and does not limit the present invention unless otherwise specified. Moreover, members and parts that perform the same effect are designated as appropriate by the same reference characters, and the redundant description thereof is omitted.

### <Puncture repair kit 1>

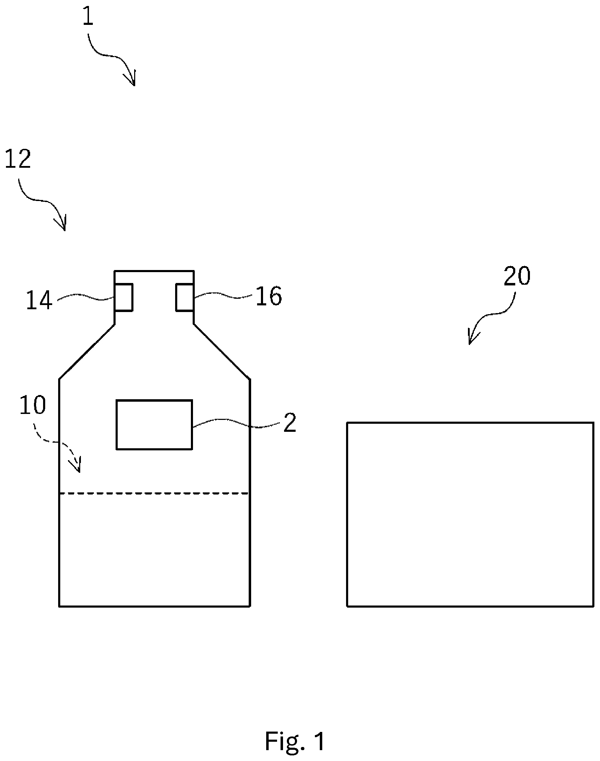

FIG. 1 is a schematic diagram of a puncture repair kit 1. The puncture repair kit 1 is a kit for temporarily repairing a tire when the tire is punctured. The puncture repair kit 1 can be provided in a vehicle. As shown in FIG. 1, the puncture repair kit 1 includes a puncture sealant 10 contained in a bottle 12, and a compressor 20.

The bottle 12 may be provided with an identifier 2 linked to information on the puncture repair kit 1 (product number, production lot, manufacturing date, etc.). Although not particularly limited, for example, a two-dimensional code such as a matrix code or a stacked code can be used as the identifier 2. The identifier 2 may also be, for example, a string composed of one or more of numbers, letters of an alphabet, and symbols. The bottle 12 includes a supply port 14 and a discharge port 16.

The discharge port 16 is connected to an air valve of a punctured tire via a tube which is not shown. The compressor 20 is connected to the supply port 14. Air compressed by the compressor 20 is supplied into the bottle 12 through the supply port 14. The compressed air mixed with the puncture sealant 10 is discharged through the discharge port 16. Accordingly, the inside of the punctured tire is filled with the compressed air, and the puncture sealant 10 is injected thereinto. The vehicle is driven for a predetermined time in this state, and the puncture sealant 10 spreads inside the tire. The puncture sealant 10 dissolves the rubber component of the inner wall surface of the tire. The puncture sealant 10 including the dissolved rubber component seals the punctured area from the inside. This enables temporary repair of the tire.

### <Puncture sealant 10>

The puncture sealant 10 contains at least a rubber component, a tackifier, an antifreeze agent, and water. The puncture sealant 10 may contain a surfactant. The puncture sealant 10 is also referred to as a puncture repair liquid. The composition of the puncture sealant 10 is not limited to those described below.

### <Rubber component>

As the rubber component, natural rubber (natural rubber latex) can be used. The rubber component is primarily composed of natural rubber, and may, as necessary, be a blend of synthetic rubber latexes such as butadiene rubber, styrene-butadiene rubber, acrylonitrile-butadiene rubber, ethylene-vinyl acetate rubber, chloroprene rubber, vinyl pyridine rubber, and butyl rubber. The rubber component is obtained by emulsifying and dispersing rubber solids in the form of fine particles in an aqueous medium containing a small amount of surfactant serving as an emulsifier. As the rubber component, rubber latex having a rubber solid content of about 60 wt% can be used.

Although not particularly limited, the amount of the blended rubber component is preferably about 15 wt% or more and 45 wt% or less, where the total weight of the puncture sealant 10 is 100 wt%. The amount of the blended rubber component is more preferably 20 wt% or more, and further preferably 22 wt% or more. With such an amount blended, favorable puncture sealing performance and seal retention performance can be obtained. The amount of the blended rubber component is more preferably 40 wt% or less, and further preferably 35 wt% or less. With such an amount blended, favorable storage stability, such as suppression of aggregation of rubber particles during storage, can be obtained. In addition, an increase in viscosity can be suppressed, and the injectability of the puncture sealant through an air valve can be ensured.

### <Tackifier>

The tackifier can be used to enhance the adhesiveness between the rubber component and the tire and to improve puncture sealing performance. As the tackifier, for example, a tackifier resin emulsion (oil-in-water type emulsion) obtained by emulsifying and dispersing a tackifier resin in the form of fine particles in an aqueous medium containing a small amount of emulsifier can be used. Although not particularly limited, as the tackifier resin which is the solid content in the tackifier resin emulsion, one that does not coagulate the rubber component can be used. As the tackifier resin, for example a terpene-based resin, a phenolic-based resin, or a rosin-based resin can preferably be used. As the tackifier resin, polyvinyl ester, polyvinyl alcohol, or polyvinylpyrrolidone may be used. As the tackifier, a hydrocarbon-based tackifier may be used.

Although not particularly limited, the amount of the blended tackifier resin (solid content of the tackifier) is preferably 2 wt% or more and 10 wt% or less, where the total weight of the puncture sealant 10 is 100 wt%. The amount of the blended tackifier resin is more preferably 4 wt% or more. With such an amount blended, favorable puncture sealing performance and seal retention performance can be obtained. The amount of the blended tackifier resin is more preferably 7 wt% or less. With such an amount blended, favorable storage stability, such as suppression of aggregation of rubber particles during storage, can be obtained. In addition, an increase in viscosity can be suppressed, and the injectability of the puncture sealant through an air valve can be ensured.

Although not particularly limited, the total amount (solid content) of the blended rubber component and the blended tackifier resin (solid content of the tackifier) is preferably in the range of 15 wt% or more and 60 wt% or less, where the total weight of the puncture sealant is 100 wt%. The total amount of the blended rubber component and the blended tackifier resin is more preferably 17 wt% or more, and further preferably 20 wt% or more. The total amount of the blended rubber component and the blended tackifier resin is more preferably 55 wt% or less, and further preferably 50 wt% or less.

### <Antifreeze agent>

As the antifreeze agent, although not particularly limited, ethylene glycol, propylene glycol (1,2-propane diol), 1,3-propane diol, or the like may be used. As the antifreeze agent, these may be used alone or in combination.

Although not particularly limited, the amount of the blended antifreeze agent is preferably 20 wt% or more and 64 wt% or less, where the total weight of the puncture sealant 10 is 100 wt%. The amount of the blended antifreeze agent is more preferably 25 wt% or more. With such an amount blended, an increase in viscosity at low temperatures can be suppressed. The amount of the blended antifreeze agent is more preferably 40 wt% or less. With such an amount blended, favorable puncture sealing performance can be obtained.

The puncture sealant 10 contains water and an antifreeze agent as liquid components. The amount of the blended antifreeze agent is preferably 48 wt% or more and 80 wt% or less, where the liquid components of the puncture sealant 10 are 100 wt%. The amount of the blended antifreeze agent in the liquid components is more preferably 50 wt% or more. With such an amount blended, an increase in the viscosity of the puncture sealant 10 at low temperatures can be further suppressed. The amount of the blended antifreeze agent in the liquid components is more preferably 70 wt% or less. With such an amount blended, favorable injectability of the puncture sealant 10 can be obtained. The amount of the blended antifreeze agent in the liquid components refers to the proportion of the antifreeze agent relative to the total weight of the antifreeze agent and water, and means (weight of antifreeze agent / total weight of water and antifreeze agent) ×100 (wt%).

Although not particularly limited, the amount of the blended water is preferably 10 wt% or more and 30 wt% or less, where the total weight of the puncture sealant 10 is 100 wt%. With such an amount blended, the viscosity of the puncture sealant 10 can be appropriately adjusted. In addition, the dispersibility of the components in the puncture sealant 10 can be favorable.

### <Surfactant>

As the surfactant, an anionic surfactant, a nonionic surfactant, a cationic surfactant, or the like can be used. As the surfactant, the nonionic surfactant can be preferably used. As the nonionic surfactant, polyoxyalkylene alkyl ether and/or polyoxyalkylene alkenyl ether are preferred.

From the viewpoint of heat resistance and injectability at low temperatures, the amount of the blended surfactant is preferably 0.1 wt% or more and 10 wt% or less, more preferably 0.3 wt% or more and 5 wt% or less, and further preferably 0.5 wt% or more and 3 wt% or less, where the rubber solids contained in the rubber component are 100 wt%.

The amount of the blended surfactant is preferably 0.01 wt% or more and 1.0 wt% or less, where the total mass of the puncture sealant is 100 wt%. The amount of the blended surfactant is more preferably 0.05 wt% or more, and further preferably 0.1 wt% or more. With such an amount blended, the injectability of the puncture sealant 10 can be improved. The amount of the blended surfactant is more preferably 0.5 wt% or less, and further preferably 0.3 wt% or less. With such an amount blended, the sealability of the puncture sealant 10 can be improved.

The puncture sealant 10 may further contain other components. The puncture sealant 10 can be manufactured by mixing the respective components and the like by a known method.

Meanwhile, the components contained in the puncture sealant 10 of the puncture repair kit 1 deteriorate over time. When the components deteriorate, the sealability for a punctured tire may become insufficient. In order to properly repair a tire puncture, an expiration date is set for the puncture repair kit 1. The puncture repair kit 1 needs to be replaced periodically with a new one, even if the puncture repair kit 1 has not been used. The present inventors are considering utilizing the puncture sealant 10 contained in an unused puncture repair kit 1.

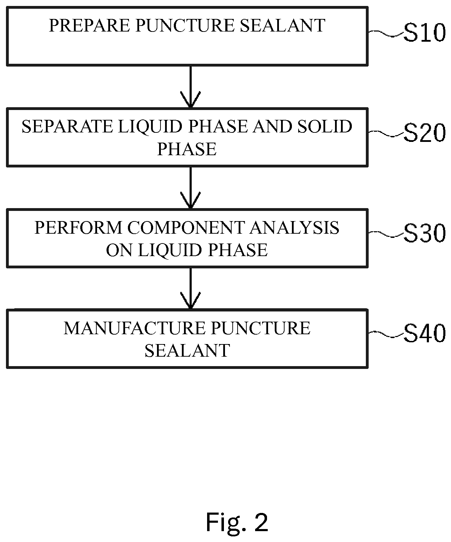

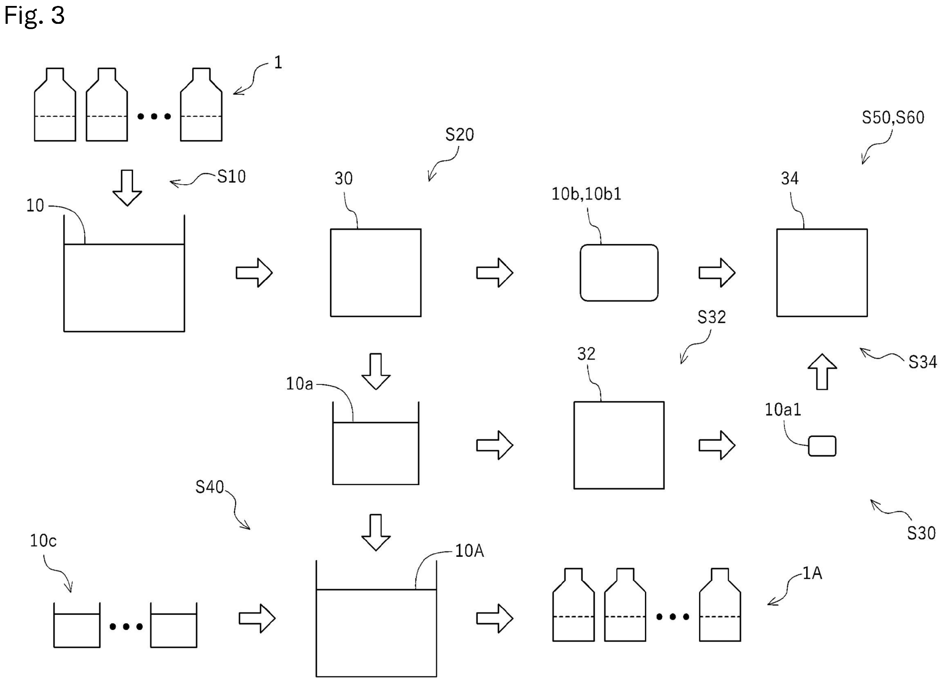

FIG. 2 is a flowchart of a recycling method for the puncture sealant 10. FIG. 3 is a schematic diagram of steps in recycling the puncture sealant 10. As shown in FIG. 2 and FIG. 3, the recycling method for the puncture sealant 10 includes step S10 of preparing the puncture sealant 10, step S20 of separating a liquid phase 10a and a solid phase 10b, step S30 of performing component analysis on the liquid phase 10a, and step S40 of manufacturing a puncture sealant 10A.

### <Preparing puncture sealant 10: step S10>

In step S10, the puncture sealants 10 are collected from the puncture repair kits 1. Here, the puncture repair kits 1 whose expiration dates have passed are collected, and the puncture sealants 10 contained in the bottles 12 can be collected. The collected puncture sealants 10 are not limited to ones whose expiration dates have passed, and may include ones whose expiration dates have not passed. The collected puncture repair kits 1 may be ones that have been brought into a store that sells puncture repair kits. The collected puncture repair kits 1 may also be ones that have been collected by a recycling company.

In step S10 of preparing the puncture sealant 10, the puncture sealants 10 may be collected from a plurality of the puncture repair kits 1 and mixed together. Since the puncture sealants 10 from the plurality of puncture repair kits 1 are mixed, the separation efficiency of the liquid phase and the solid phase described below, and the analysis efficiency and the utilization efficiency in the component analysis described below can be improved. When the puncture sealants 10 from the plurality of puncture repair kits 1 are mixed, the puncture sealants 10 to be mixed may be selected according to the manufacturing date or the product. Puncture sealants 10 whose manufacturing dates are close to each other tend to have similar degrees of component degradation, which makes it easier to improve the efficiency of the component analysis. Since the puncture sealants 10 are mixed according to the product, the state of each component tends to be more uniform when the component is utilized.

### <Separating liquid phase 10a and solid phase 10b: step S20>

In step S20, the liquid phase 10a and the solid phase 10b are separated from the collected puncture sealant 10. The liquid phase 10a contains water, an antifreeze agent, a rubber component, and a tackifier of the puncture sealant 10. The liquid phase 10a mainly contains an aqueous medium of the rubber component. The solid phase 10b contains the rubber component and the tackifier of the puncture sealant 10. The solid phase 10b mainly contains rubber latex of the rubber component. When the puncture sealant 10 contains a surfactant, the surfactant may be present in both the liquid phase 10a and the solid phase 10b. The liquid phase 10a and the solid phase 10b may contain, as a trace component, a component that may be present in another phase.

A method for separating the liquid phase 10a and the solid phase 10b is not particularly limited. As the method for separating the liquid phase 10a and the solid phase 10b, at least one of centrifugal separation and filter separation can be used. This allows the components contained in each of the liquid phase 10a and the solid phase 10b to be easily and appropriately separated. The processing conditions for centrifugal separation, the type of filter to be used, and the like can be appropriately set according to the components of the puncture sealant 10 during manufacturing.

In this embodiment, the puncture sealant 10 is separated into the liquid phase 10a and the solid phase 10b by centrifugal separation. A centrifugal separation device 30 is used for separating the liquid phase 10a and the solid phase 10b. In order to increase the amount of the puncture sealant 10 to be processed, a continuous centrifugal separator may be used as the centrifugal separation device 30. Since the liquid phase 10a and the solid phase 10b are separated by centrifugal separation, it is possible to separate puncture sealants having different compositions by using the same device regardless of the size of particles in the component (e.g., rubber component). In addition, the processing conditions such as rotation speed and processing time have a high degree of flexibility, which makes it easier to appropriately set the processing conditions according to the composition of the puncture sealant. Furthermore, maintenance of the device can also be simple. The liquid phase 10a and the solid phase 10b may be separated by filter separation. Filter separation allows the equipment to be operated regardless of time. As a result, the amount of the puncture sealant 10 to be processed tends to increase.

When the puncture sealant 10 is separated into the liquid phase 10a and the solid phase 10b, the puncture sealant 10 may be subjected to a treatment for improving the separation processing efficiency. For example, the puncture sealant 10 may be heated before separation such that the rubber component contained therein becomes aggregated. The heating conditions are not particularly limited and can be appropriately set according to the rubber component contained in the puncture sealant 10. As another method, the puncture sealant 10 may be bubbled before separation such that the rubber component contained therein becomes aggregated. In addition, a small amount of acid or electrolyte (salt) may be added to the puncture sealant 10 such that the rubber component contained therein becomes aggregated. Since the rubber component becomes aggregated, the solid content of the rubber component is more likely to be contained in the solid phase 10b during separation, and the separation efficiency can be improved. The above-described conditions for aggregating the rubber component can be appropriately set according to the type of the puncture sealant 10 and the like.

### <Performing component analysis on liquid phase 10a: step S30>

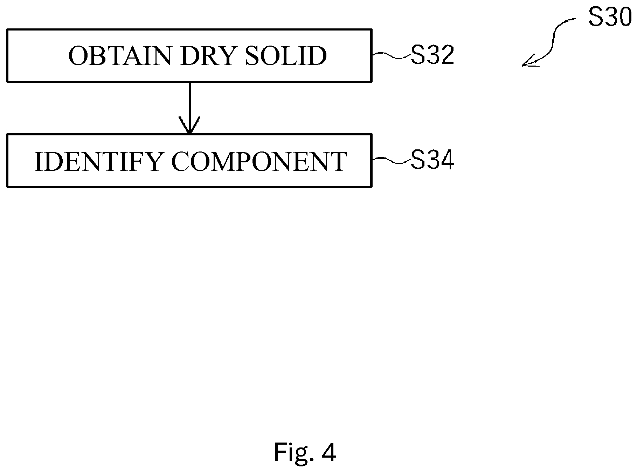

FIG. 4 is a flowchart of a component analysis method for the puncture sealant 10. In FIG. 4, steps for performing component analysis on the liquid phase 10a separated from the puncture sealant 10 are shown. As shown in FIG. 3 and FIG. 4, step S30 of performing component analysis on the liquid phase 10a includes step S32 of obtaining a dry solid 10a1 and step S34 of identifying the components contained in the dry solid 10a1. Step S30 may be applied as a component analysis method for the puncture sealant.

### <Obtaining dry solid 10a1: step S32>

In step S32, the dry solid 10a1 is obtained by drying the separated liquid phase 10a. In step S32, a required amount (not particularly limited, but about 1 g to 100 g, e.g., about 1 g to 10 g) of the liquid phase 10a separated from the puncture sealant 10 is taken and subjected to a drying process by using a drying device 32. A drying method for the liquid phase 10a and the drying device 32 used are not particularly limited. As the drying device 32, a constant-temperature dryer, a vacuum dryer, an infrared dryer, or the like may be used. As the drying device 32, an oven may be used. The drying method may be performed by known methods such as reduced-pressure drying, hot-air drying, infrared drying, and low-temperature drying. From the viewpoint of preventing thermal decomposition of components, it is preferable that the drying temperature is not too high. The drying temperature is preferably 60°C or lower, and more preferably 40°C or lower. Although not particularly limited, the drying temperature may be set at 20°C or higher, for example, 30°C or higher. From the viewpoint of shortening the processing time and removing liquid components contained in the liquid phase 10a as much as possible, it is preferable that the separated liquid phase 10a is dried under a reduced-pressure environment. Since the liquid phase 10a is dried under a reduced-pressure environment, solvent components in the liquid phase 10a, particularly, a component (e.g., an antifreeze agent) that is difficult to be removed, can be more easily removed.

As described above, the liquid phase 10a contains water, an antifreeze agent, a rubber component, and a tackifier (and, when the puncture sealant 10 contains a surfactant, the surfactant). When the liquid phase 10a is dried, the liquid components (water and antifreeze agent) are removed. The dry solid 10a1 containing the rubber component and the tackifier (and, when puncture sealant 10 contains a surfactant, the surfactant) is obtained. After drying, the weight of the dry solid 10a1 obtained from the liquid phase 10a, from which the liquid components have been removed, may be about 3% to 10% of the original weight of the liquid phase 10a.

The components that decrease when the dry solid 10a1 is obtained from the liquid phase 10a are the solvent components (water and antifreeze agent) contained in the liquid phase 10a. The solvent components contained in the liquid phase 10a may account for about 90% to 97% of the liquid phase 10a. The solvent components may be subjected to component analysis by nuclear magnetic resonance (NMR) or the like.

### <Identifying components contained in dry solid 10a1: step S34>

In step S34, the components contained in the dry solid 10a1 are identified by thermal analysis. Here, a required amount (not particularly limited, but about 1 mg to 20 mg) is taken from the dry solid 10a1 and analyzed by using a thermal analysis instrument 34. A method for analyzing the composition of the liquid phase 10a and the thermal analysis instrument 34 to be used are not particularly limited. The composition of the liquid phase 10a can be analyzed by thermogravimetric analysis (TGA), differential thermal analysis (DTA), or the like. The composition of the liquid phase 10a may be analyzed by differential scanning calorimetry (DSC). The composition of the liquid phase 10a may be analyzed by combining a plurality of analytical techniques. Examples of analytical methods include mass spectroscopy (TGA-MS), Fourier transform infrared spectroscopy (TGA-FTIR), and gas chromatography mass spectroscopy (TGA-GCMS). The composition of the dry solid 10a1 can be analyzed by either thermogravimetric analysis or differential thermal analysis. Such a method can increase the accuracy in analyzing the composition of the dry solid 10a1 contained in the liquid phase 10a.

As an example of a method for thermally analyzing the composition of the dry solid 10a1, thermogravimetric analysis will be described. In thermogravimetric analysis, the temperature is increased from normal temperature (e.g., about 15°C to 25°C) to a temperature at which the dry solid 10a1 decomposes. From the viewpoint of sufficiently thermally decomposing the dry solid 10a1 and shortening the analysis time, the target temperature is preferably about 800°C, and more preferably about 700°C. The target temperature is 400°C or higher, and may be 500°C or higher. From viewpoint of accurately analyzing the components contained in the puncture sealant 10 and shortening the analysis time, the heating rate is preferably 20°C/min or less, and more preferably 10°C/min or less. The heating rate is 1°C/min or more, and may be 5°C/min or more. The atmosphere during analysis may be set to an oxygen-free atmosphere, such as a nitrogen atmosphere, from the viewpoint of preventing oxidation of the components. The above-described heating conditions are not limited to those described above, and may be appropriately set according to the components of the puncture sealant 10, etc. during manufacturing.

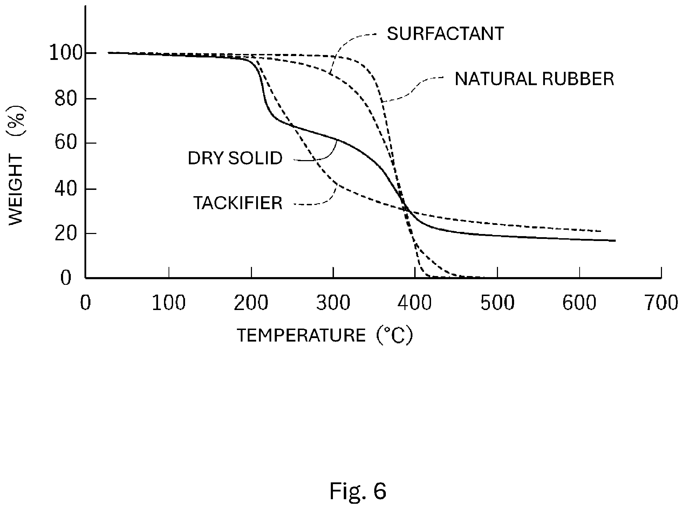

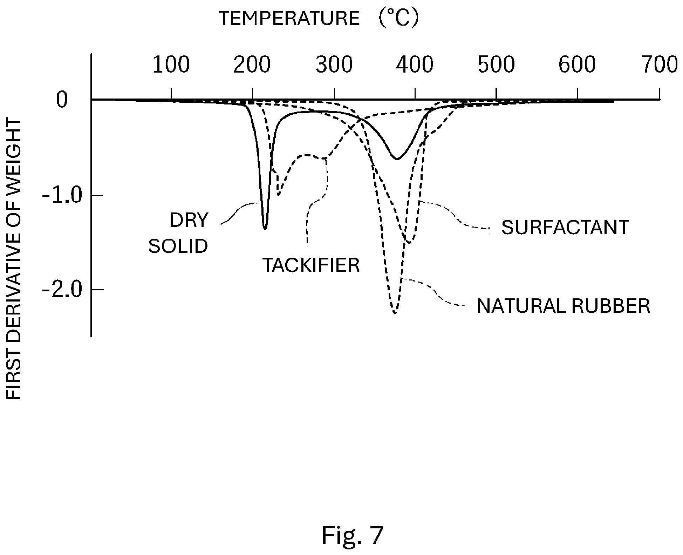

The thermal decomposition curve of the dry solid 10a1 is obtained by thermal analysis. The components contained in the puncture sealant 10 are previously grasped from information at the time of manufacturing the puncture sealant 10. When the contributions of weight changes from the respective components (in this embodiment, the rubber component, the tackifier, and the surfactant) contained in the dry solid 10a1 are separated, the weights of the components can be quantified based on the patterns of the obtained thermal decomposition curves. The components contained in the dry solid 10a1 may be quantified based on derivative curves (see FIG. 7) of the thermal decomposition curves (see FIG. 6). Since the components contained in the dry solid 10al are quantified based on the derivative curves, changes in the weights of the components over time can be detected more accurately. As a result, the components contained in the dry solid 10a1 can be quantified more accurately. For example, when the puncture sealant 10 contains a surfactant, the accuracy of component analysis can be improved by performing component analysis based on a derivative curve thereof. However, analysis based on derivative curves is not essential.

Meanwhile, the puncture sealant contains a large amount of solvent components (e.g., water and antifreeze agent) and a rubber component. According to the knowledge of the present inventors, when the puncture sealant is analyzed, it is difficult to detect and quantify trace amounts of solute components (e.g., a rubber component, a tackifier, and, if present, a surfactant) dissolved therein, since the puncture sealant contains the large amount of solvent components. In addition, there is a concern that the rubber component contained in the puncture sealant may clog a flow path of an analytical instrument, and it is difficult to perform separation analyses such as chromatography.

The above-described component analysis method for the puncture sealant is a component analysis method for a puncture sealant that contains at least a rubber component, a tackifier, an antifreeze agent, and water. The component analysis method includes step S20 of separating the liquid phase 10a and the solid phase 10b from the puncture sealant 10, step S32 of obtaining the dry solid 10a1 by drying the separated liquid phase 10a, and step S34 of identifying the components contained in the dry solid 10a1 by thermal analysis. When the dry solid 10a1 is obtained by drying the separated liquid phase 10a and is subjected to thermal analysis, the solvent components (water and antifreeze agent) which account for the majority of the components contained in the liquid phase 10a are removed. As a result, the accuracy in analyzing the compositions of trace amounts of solute components (a rubber component, a tackifier, and, if present, a surfactant) contained in the liquid phase 10a is improved.

Next, the recycling method for the liquid phase 10a separated from the puncture sealant 10 will be described. The separated liquid phase 10a can be used in a newly manufactured puncture sealant. In step S40, based on the composition of the liquid phase 10a subjected to components analysis, the puncture sealant 10A is manufactured utilizing the liquid phase 10a.

### <Manufacturing puncture sealant 10A: step S40>

In step S40, based on the composition of the liquid phase 10a, which has been obtained in step S30 of performing component analysis on the liquid phase 10a, water, an antifreeze agent, a rubber component, and a tackifier (and, when a surfactant is contained, the surfactant) are mixed into the separated liquid phase 10a. The separated liquid phase 10a is the liquid phase 10a separated in the step of separating the liquid phase 10a and the solid phase 10b from the puncture sealant 10. The newly manufactured puncture sealant 10A has a predetermined component composition. Here, required components 10c (water, an antifreeze agent, a rubber component, a tackifier, a surfactant, and the like) are mixed into the liquid phase 10a separated from the puncture sealant 10, to manufacture the new puncture sealant 10A. Accordingly, the puncture sealant 10A having an appropriate composition is manufactured.

The newly manufactured puncture sealant 10A contains at least a rubber component, a tackifier, an antifreeze agent, and water. The rubber component of the puncture sealant 10A contains the rubber component contained in the puncture sealant 10. Thus, the rubber component of the puncture sealant 10A partially contains a degraded rubber component. The rubber component of natural rubber or the like varies in molecular weight, and thus is not particularly limited. The rubber component contained in the puncture sealant 10A may contain a first rubber having a weight-average molecular weight of 500,000 or more and a second rubber having a weight-average molecular weight of 100,000 or less. The weight-average molecular weight of the first rubber may be 1,500,000 or less. The first rubber may be a component derived from a newly prepared rubber component (natural rubber latex). The second rubber may be a component contained in the liquid phase 10a separated from the puncture sealant 10. Since the second rubber was originally contained in the puncture sealant 10 and a period of time has elapsed since the manufacturing date, the molecular weight of the second rubber has decreased due to deterioration, thereby resulting in the aforementioned molecular weight. The weight ratio of the second rubber to the first rubber (the weight of the second rubber / the weight of the first rubber) may be approximately 0.05 or more and 0.15 or less. Since the puncture sealant 10A contains the newly prepared rubber component, the puncture repair performance of the puncture sealant 10A can be sufficient. From the viewpoint of improving puncture repair performance, the liquid phase 10a to be mixed into the puncture sealant 10A may be reduced. In this case, the weight ratio of the second rubber to the first rubber (the weight of the second rubber / the weight of the first rubber) may become less than 0.05.

The puncture sealant 10A may further contain a surfactant whose structure has changed. The surfactant contained in the puncture sealant 10 may undergo structural changes such as oxidation, as a period of time elapses from the manufacturing date. The oxidized surfactant has changed in mass from the original surfactant. The change in mass may be detected, for example, by liquid chromatography-mass spectrometry (LCMS). The structure of the surfactant whose structure has changed may be detected by nuclear magnetic resonance. Even the puncture sealant 10A containing such a surfactant can have sufficient puncture repair performance, since the puncture sealant 10A contains a newly prepared surfactant.

As described above, the recycling method for the puncture sealant 10 includes step S10 of preparing the puncture sealant 10, step S20 of separating the liquid phase 10a and the solid phase 10b, step S30 of performing component analysis on the liquid phase 10a, and step S40 of manufacturing the puncture sealant 10A. In step S10 of preparing the puncture sealant 10, the puncture sealant 10 that contains at least a rubber component, a tackifier, an antifreeze agent, and water is prepared. The liquid phase 10a separated in step S20 of separating the liquid phase 10a and the solid phase 10b contains water, an antifreeze agent, a rubber component, and a tackifier. The solid phase 10b separated in step S20 of separating the liquid phase 10a and the solid phase 10b contains a rubber component and a tackifier. In step S40 of manufacturing the puncture sealant 10A, the puncture sealant 10A is manufactured utilizing the liquid phase 10a, based on the composition of the liquid phase 10a subjected to component analysis. According to such a recycling method, the aged puncture sealant 10 can be used as a component of the new puncture sealant 10A. The puncture repair kit 1A can be manufactured from the newly manufactured puncture sealant 10A.

Next, a recycling method for the solid phase 10b separated from the puncture sealant 10 will be described.

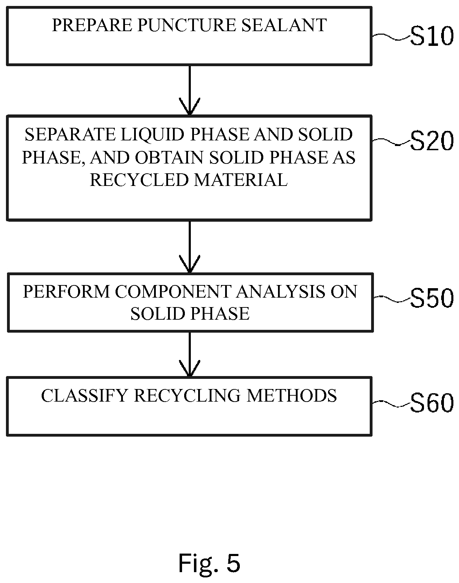

FIG. 5 is a flowchart of the recycling method for the puncture sealant 10. FIG. 5 shows steps for performing component analysis on the solid phase 10b separated from the puncture sealant 10. As shown in FIG. 5, the separated solid phase 10b can be used as a recycled material 10b1. In other words, the recycling method for the puncture sealant 10 includes a manufacturing method for the recycled material 10b1. Step S20 of separating the liquid phase 10a and the solid phase 10b may also be referred to, as appropriate, as step S20 of obtaining the solid phase 10b as the recycled material 10b1 by separating the liquid phase 10a and the solid phase 10b.

The manufacturing method for the recycled material 10b1 includes step S10 of preparing the puncture sealant, and step S20 of obtaining the solid phase 10b as the recycled material 10bl by separating the liquid phase 10a and the solid phase 10b from the puncture sealant 10. The puncture sealant 10 contains at least a rubber component, a tackifier, an antifreeze agent, and water. The liquid phase 10a contains water, an antifreeze agent, a rubber component, and a tackifier. The solid phase 10b contains a rubber component and a tackifier. Except for a portion taken for component analysis, the separated solid phase 10b can be used as the recycled material 10b1 after undergoing processes such as a washing process and a drying process. The applications of the recycled material 10b1 can be variously selected according to the components contained therein.

The recycling method for the puncture sealant 10 may further include step S50 of performing component analysis on the solid phase 10b and step S60 of classifying recycling methods, based on the composition of the solid phase 10b obtained as the recycled material 10b1.

### <Performing component analysis on solid phase 10b: step S50>

In step S50, the components of the solid phase 10b are analyzed. Here, a required amount (not particularly limited, but about 1 mg to 20 mg) is taken from the solid phase 10b separated from the puncture sealant 10 and analyzed by using the thermal analysis instrument 34. The composition of the solid phase 10b is subjected to component analysis by thermal analysis. The composition of the solid phase 10b may be analyzed by the same method as that used for analyzing the composition of the liquid phase 10a.

The recycled material 10b1 manufactured from the solid phase 10b contains 70 wt% or more and 90 wt% or less of a rubber component, and 5 wt% or more and 25 wt% or less of a tackifier, where the total weight of the recycled material 10b1 is 100 wt%. The recycled material 10b1 may contain 75 wt% or more and 85 wt% or less of the rubber component. The recycled material 10b1 may contain 10 wt% or more and 20 wt% or less of the tackifier. When the puncture sealant 10 contains a surfactant, the recycled material 10b1 manufactured from the solid phase 10b may contain 1 wt% or more and 10 wt% or less of the surfactant, where the total weight of recycled material 10b1 is 100 wt%. The recycled material 10b1 manufactured from the solid phase 10b can be used for various applications. The recycled material 10b1 may contain a surfactant whose structure has changed.

### <Classifying recycling methods: step S60>

In step S60, recycling methods are classified based on the composition of the solid phase 10b as the recycled material 10b1 subjected to component analysis. The solid phase 10b as the recycled material 10b1 may be used, for example, as a part of the rubber components of industrial tires such as those used for forklifts or trucks. Not limited to tires, the solid phase 10b as the recycled material 10b1 may be used as a rubber product (e.g., as a material forming the interior of a solid-core type rubber ball). As described above, the solid phase 10b may contain a rubber component, a tackifier, and a surfactant. The utilization methods for the solid phase 10b may be classified, for example, according to the content (content ratio) of the rubber component and the elapsed period (time since the manufacturing date). When used as the recycled material 10b1, the solid phase 10b may be incorporated in a greater amount as a rubber component of a rubber product such as a tire, when the solid phase 10b contains a higher proportion of rubber component. In addition, the shorter the elapsed period, the less the deterioration of the rubber component has progressed. Thus, the solid phase 10b as the recycled material 10b1 tends to be used for a wide range of applications. The solid phase 10b separated from the puncture sealant 10 can be used as the recycled material 10b1 for various applications, based on the composition thereof. Since the recycling methods are classified according to the composition of the solid phase 10b subjected to component analysis, the solid phase 10b becomes more likely to be appropriately reused.

### <Examples>

Hereinafter, examples will be given to describe the embodiment that includes the recycling method for the puncture sealant, the component analysis method for the puncture sealant, and the manufacturing method for the recycled material as described above.

The puncture sealant contains a rubber component, a tackifier, a surfactant, an antifreeze agent, and water. Such a puncture sealant was processed by centrifugal separation. As the rubber component, natural rubber latex was used. As the tackifier, a hydrocarbon-based tackifier was used. As the surfactant, a nonionic surfactant was used. As the antifreeze agent, propylene glycol was used. Here, a high-speed refrigerated centrifuge, H-9R (manufactured by KOKUSAN Co. Ltd.), was used as a centrifugal separation device. The rotation speed was set to 10000 rpm and the processing time was set to 1 hour, and the puncture sealant was subjected to centrifugal separation under a normal temperature environment. Due to the centrifugal separation, the puncture sealant was separated into a liquid phase and a solid phase.

Of the separated liquid phase, 100 g was transferred into a glass container (beaker). The transferred liquid phase was subjected to a drying process. The transferred liquid phase was dried under reduced pressure overnight at a set temperature of 40°C by using an oven capable of reduced-pressure drying. Through the drying process, solvent components were removed from the liquid phase, whereby a dry solid of the liquid phase was obtained. The weight of the dry solid was 5.5 g. The solute components (rubber component, tackifier, and surfactant) in the liquid phase accounted for 5.5%, while the solvent components (water and antifreeze agent) in the liquid phase accounted for 94.5%.

The dry solid of the liquid phase was subjected to component analysis by thermal analysis. Here, as the thermal analysis instrument, TGA550 manufactured by TA Instruments was used. The temperature range was set from room temperature (25°C) to 700°C and the heating rate was set to 10°C/min, and thermogravimetric analysis was performed under a nitrogen atmosphere. Then, the thermal decomposition curve of the dry solid of the liquid phase was obtained. In addition, a derivative curve was obtained from the thermal decomposition curve.

FIG. 6 is a graph showing an example of the thermal decomposition curves that are obtained when the dry solid is subjected to thermal analysis. In the thermal decomposition curve graph, the horizontal axis represents temperature, and the vertical axis represents the percentage of weight. FIG. 7 is a graph showing derivative curves of the thermal decomposition curves in FIG. 6. In the derivative curve graph, the horizontal axis represents temperature, and the vertical axis represents the first derivative of weight. In FIG. 6 and FIG. 7, the time-dependent change in the weight of the dry solid is shown by a solid line. In FIG. 6 and FIG. 7, the time-dependent changes in the weights of the solute components, which have been previously obtained, are shown by dashed lines.

According to the thermal decomposition curve shown in FIG. 6, a decrease in the weight of the dry solid is observed when the temperature exceeds 200°C. This weight loss occurs at approximately the same temperature at which the tackifier, among the solute components of the puncture sealant, starts to lose weight. Furthermore, when the temperature exceeds 450°C, it is confirmed that some dry solid remains. This trend is similar to the trend of weight loss in the tackifier. From this, it has been found that the dry solid contains the tackifier.

According to the thermal decomposition curve, it is confirmed that significant weight loss starts when the temperature exceeds 350°C. This weight loss is similar to those of the rubber component and the surfactant, among the solute components of the puncture sealant. Here, in order to emphasize the starting and ending points of the weight loss and the like, derivative curves of the thermal decomposition curves (see FIG. 7) have been obtained. Based on the derivative curves, the weight loss peaks of the rubber component and the surfactant are clearly distinguishable. It is found that the weight loss of the dry solid is due to the weight loss of the rubber component and the surfactant. When the puncture sealant contains a surfactant, component analysis based on a derivative curve thereof improves the accuracy of the component analysis.

As described above, it has been confirmed from the thermal decomposition curves and the derivative curves that the dry solid contains the rubber component, the surfactant, and the tackifier. From the obtained thermal decomposition curves and the previously obtained thermal decomposition curves of the rubber component, the surfactant, and the tackifier, the weight ratio of each component was obtained. In the dry solid (solute component) of the liquid phase, the tackifier accounted for 65%, the rubber component accounted for 30%, and the surfactant accounted for 5%.

Next, the solvent components of the liquid phase were subjected to component analysis by the nuclear magnetic resonance method. As the solvent components, water accounted for 45%, and the antifreeze agent accounted for 55%.

Based on the result of component analysis of both the solvent and solute components, and the respective ratios of the solvent and solute components, the composition of the liquid phase of the puncture sealant was calculated. According to the calculation result, the liquid phase of the puncture sealant consisted of 1.35% rubber component, 2.925% tackifier, 0.225% surfactant, 52.525% antifreeze agent, and 42.975% water. Here, the target composition of the newly manufactured puncture sealant was 30% rubber component, 5% tackifier, 1.5% surfactant, 42% antifreeze agent, and 21.5% water. To achieve this composition, the separated liquid phase was mixed with newly prepared components (rubber component, tackifier, surfactant, and antifreeze agent). Such mixing was performed such that the newly manufactured puncture sealant contained 60% of the separated liquid phase, 27% natural rubber (solid content: 60%), 2% tackifier, 1% surfactant, and 10% antifreeze agent.

A puncture sealant manufactured utilizing the liquid phase separated from an old puncture sealant according to the above-described method was evaluated for sealing performance against punctures. As puncture sealants, a puncture sealant manufactured utilizing the liquid phase separated from an old puncture sealant and a puncture sealant manufactured from new materials were prepared. A tire having a size of 195/65R15 was punctured with a nail having a diameter of 6 mm. After the nail was removed, 300 ml of the puncture sealant was injected into the punctured tire, and air was supplied until the internal pressure reached 250 kPa. A vehicle on which the punctured tire was mounted was caused to travel under a load of 3.5 kN at a speed of 40 km/h. Every 3 km, it was checked whether the puncture in the tire was sealed. After the vehicle was caused to travel 3 km, the punctures were sealed in both the tire injected with the puncture sealant manufactured utilizing the liquid phase separated from the old puncture sealant and the tire injected with the puncture sealant manufactured from the new materials. From this, it has been confirmed that even a puncture sealant manufactured utilizing the liquid phase separated from the old puncture sealant has sufficient puncture repair performance.

The solid phase separated from the puncture sealant was subjected to thermal analysis in the same manner as the dry solid of the liquid phase. The composition of the solid phase was 15% tackifier, 80% rubber component, and 5% surfactant. As described above, such a solid phase can be utilized as a recycled material after undergoing processes such as a washing process and a drying process. According to the above-described analysis result, the solid phase separated from the puncture sealant was found to be usable as a part of an industrial tire.

The technology disclosed herein has been described above in various ways. However, the technology disclosed herein is not limited to the above-described embodiment unless otherwise specified. In addition, the configurations of various embodiments can be appropriately combined as long as the configurations do not interfere with each other. The present specification includes the following disclosures, which are not limited to the above-described embodiment.

Present Invention (1) relates to a component analysis method for a puncture sealant. The component analysis method for the puncture sealant in Present Invention (1) is a component analysis method for a puncture sealant that contains at least a rubber component, a tackifier, an antifreeze agent, and water, the component analysis method including:
a step of separating a liquid phase and a solid phase from the puncture sealant;
a step of obtaining a dry solid by drying the separated liquid phase; and
a step of identifying a component contained in the dry solid by thermal analysis.

Present Invention (2) is the component analysis method for the puncture sealant according to Present Invention (1), wherein the thermal analysis is either thermogravimetric analysis or differential thermal analysis.

Present Invention (3) is the component analysis method for the puncture sealant according to Present Invention (2), wherein
in the thermal analysis, a heating rate is set to a condition of 20°C/min or less.

Present Invention (4) is the component analysis method for the puncture sealant according to any one of Present Inventions (1) to (3), wherein
the thermal analysis includes obtaining a thermal decomposition curve, and
in the step of identifying the component, the component contained in the dry solid is quantified based on a derivative curve of the thermal decomposition curve.

Present Invention (5) is the component analysis method for the puncture sealant according to any one of Present Inventions (1) to (4), wherein
in the step of obtaining the dry solid, the separated liquid phase is dried under a reduced-pressure environment.

## Claims

1. A component analysis method for a puncture sealant (10) that contains at least a rubber component, a tackifier, an antifreeze agent, and water, the component analysis method comprising:
a step of separating a liquid phase (10a) and a solid phase (10b) from the puncture sealant (10);
a step of obtaining a dry solid (10a1) by drying the separated liquid phase (10a); and
a step of identifying a component contained in the dry solid (10a1) by thermal analysis.

2. The component analysis method for the puncture sealant (10) according to claim 1, wherein the thermal analysis is either thermogravimetric analysis or differential thermal analysis.

3. The component analysis method for the puncture sealant (10) according to claim 2, wherein
in the thermal analysis, a heating rate is set to a condition of 20°C/min or less.

4. The component analysis method for the puncture sealant (10) according to any one of claims 1 to 3, wherein
the thermal analysis includes obtaining a thermal decomposition curve, and
in the step of identifying the component, the component contained in the dry solid (10a1) is quantified based on a derivative curve of the thermal decomposition curve.

5. The component analysis method for the puncture sealant (10) according to any one of claims 1 to 4, wherein
in the step of obtaining the dry solid (10a1), the separated liquid phase (10a) is dried under a reduced-pressure environment.
